Europäisches Patentamt

European Patent Office

Office européen des brevets

(11) Veröffentlichungsnummer: **0 253 170 B1**

(12) **EUROPÄISCHE PATENTSCHRIFT**

(45) Veröffentlichungstag der Patentschrift: **16.12.92**

(21) Anmeldenummer: **87109157.5**

(22) Anmeldetag: **25.06.87**

(51) Int. Cl.⁵: **H02B  11/12**

(54) **Kontaktanordnung für einschiebbare Leistungsschalter.**

(30) Priorität: **28.06.86 DE 3621748**
**26.01.87 DE 3702199**
**23.02.87 DE 3705728**

(43) Veröffentlichungstag der Anmeldung:
**20.01.88 Patentblatt  88/03**

(45) Bekanntmachung des Hinweises auf die
Patenterteilung:
**16.12.92 Patentblatt  92/51**

(84) Benannte Vertragsstaaten:
**DE FR GB IT NL SE**

(56) Entgegenhaltungen:
**DE-A- 1 590 231**
**FR-A- 1 541 812**
**GB-A- 784 811**
**US-A- 2 777 024**
**US-A- 3 188 415**

(73) Patentinhaber: **Licentia Patent-**
**Verwaltungs-GmbH**
**Theodor-Stern-Kai 1**
**W-6000 Frankturt/Main 70(DE)**

(72) Erfinder: **Krafft, Henning, Dipl.-Ing.**
**Leddingstrasse 30**
**W-2350 Neumünster(DE)**
Erfinder: **Grahlmann, Klaus**
**Hagedornbusch 27**
**W-2350 Neumünster(DE)**

(74) Vertreter: **Lertes, Kurt, Dr. et al**
**Licentia Patent-Verwaltungs-GmbH Theodor-**
**Stern-Kai 1**
**W-6000 Frankturt/M 70(DE)**

## Beschreibung

Die Erfindung betrifft eine Kontaktanordnung nach dem Oberbegriff des Anspruchs 1.

In der DE-OS 15 90 231 wird ein Leistungsschalter für den Einbau in Schaltanlagen beschrieben, der zwecks Auftrennen der elektrischen Verbindung über verschiebbare oder zangenartig klappbare Steckkupplungen an die Sammelschienen angeschlossen ist. Die Steckkupplungen sind an einer Isolierwand gelagert und mit dieser gemeinsam in Richtung der Sammelschienen verschiebbar.

In der bekannten Kontaktanordnung sitzt der Leistungsschalter hinter einer Trennwand, durch die hindurch über einen doppelarmigen Hebel die Verschiebung der Steckkupplungen erwirkt wird. Die bekannte Kontaktanordnung hat den Nachteil, daß beim Austausch des Leistungsschalters der Hebelantrieb an der Frontplatte abmontiert werden muß, daß die Isolierwand, die die Steckkupplungen aufnimmt, nur zur Isolierung der Steckkupplungen untereinander dient und keinen elektrischen Isolierschutz gegenüber dem fest eingebauten stromführenden Anlageteilen bietet und daß ein Einbau der Kontaktanordnung nur in solche Schaltanlagen möglich ist, deren frontseitige Trennwände dafür geeignet sind.

Weiterhin ist durch die US-A-3,188,415 eine Kontaktanordnung für einschiebbare Leistungsschalter in Schaltanlagen bekannt, bei der keine Mittel vorhanden sind, durch die in den Betriebsstellungen AUS und TEST alle stromführenden Teile berührungs- und werkzeugsicher abgedeckt werden. Auch sind hierbei keine in einem bewegbaren Kontaktrahmen angeordnete Kontaktbrücken vorhanden, wobei der Kontaktrahmen über einen fest im Einschubträger unterhalb des Leistungsschalters angeordneten Spindelantrieb in die verschiedenen Betriebsstellungen bewegt wird.

Durch die US-A-2,777,024 ist ein herausziehbarer Leistungsschalter bekannt, bei dem der Antriebsmechanismus aus einem Spindelantrieb besteht. Der Verschiebemechanismus für den Leistungsschalter weist Führungsrollen und entsprechende Führungsschienen auf.

Aufgabe der Erfindung ist es, eine Kontaktanordnung zu schaffen, bei der über einen Antrieb alle elektrischen Verbindungen für die Betriebsstellungen TEST und EIN hergestellt werden, die Fixierung des Schalters in diesen Betriebsstellungen erreicht wird und in den Betriebsstellungen AUS und TEST alle stromführenden Teile berührungs- und werkzeugsicher abgedeckt werden.

Vorteile der Kontaktanordnung gemäß der Erfindung sind darin zu sehen, daß durch die Anordnung des Spindelantriebes unterhalb des Leistungsschalters die Schalter ohne Montageaufwand ausgetauscht werden können, beliebige frontseitige Ausführungsformen der Schalter möglich sind, eine zwangsgeführte Fixierung des Schalters und ebenfalls zwangsgeführt eine berührungs- und werkzeugsichere Abdeckung der stromführenden Anlagenteile erreicht wird, wenn sich der Schalter in den Betriebsstellungen TEST und EIN befindet. Ein weiterer Vorteil ist darin zu sehen, daß die Betriebsstellung TEST ebenfalls über den Spindelantrieb eingestellt werden kann.

Anhand des in der Zeichnung dargestellten Ausführungsbeispieles wird die Erfindung näher erklärt. Es zeigen:

Fig. 1 die Betriebsstellung AUS,
Fig. 2 die Betriebsstellung EIN,
Fig. 3 die Isolierung der stromführenden Anlagenteile in den Betriebsstellungen AUS bis EIN,
Fig. 4 die Fixierung des Schalters im Einschubträger für ßetriebsstellung TEST und
Fig. 5 die Steck-Kontoktvorrichtung für die Nebenstromkreise in der Betriebsstellung AUS.

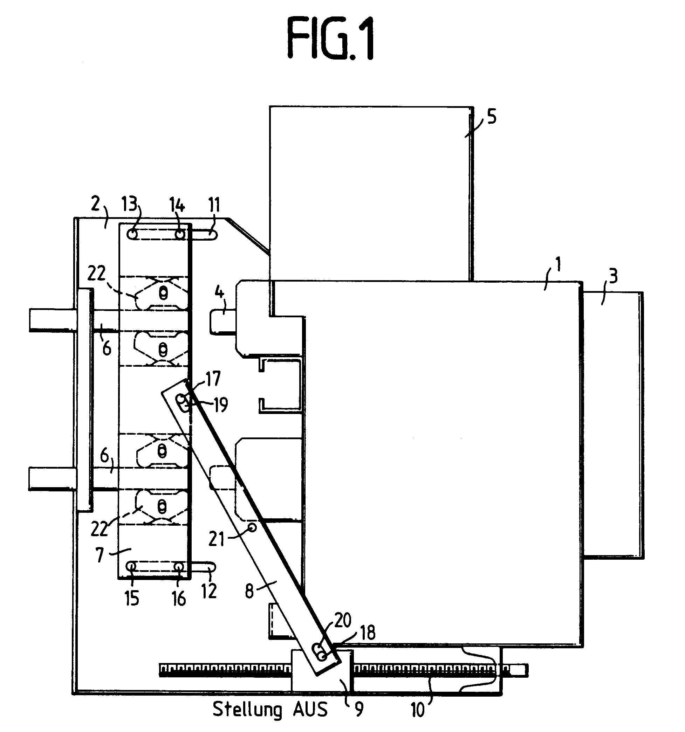

In Fig. 1 ist mit 1 der einschiebbare Schalter bezeichnet, der in den Einschubträger 2 bis zu einer vorbestimmten Position eingeschoben ist. Auf der Schalterfrontseite befindet sich der Antriebstubus 3 und auf der Rückseite sind Anschlußfahnen 4 angeordnet. 5 bezeichnet eine Lichtbogenlöschkammer.

Der Einschubträger 2 weist ebenfalls Anschlußfahnen 6 auf, die mit nicht dargestellten Sammelschienen fest verbunden sind. Zur elektrischen Verbindung der Anschlußfahnen 4 und 6 ist ein Kontaktrahmen 7 vorgesehen, der über einen Antriebshebel 8 mit einer Spindelmutter 9 verschiebbar ist. Die Spindel 10 wird in bekannter Weise von der Frontseite der Schaltanlage betätigt.

Die Verschiebung des Kontaktrahmens 7 wird über Schlitze 11,12 im Einschubträger 2 und je zwei Zapfen 13,14; 15,16 im Kontaktrahmen 7 oder über Stifte 47, 48 verkantungssicher bewerkstelligt. Der Antriebshebel 8 ist mittels Zapfen 17, 18 im Kontaktrahmen 7 und Spindelmutter 9 und Langlöcher 19, 20 im Hebel 8 über einen festen Zapfen 21 im Einschubträger 2 schwenkbar.

Der Kontaktrahmen 7 weist federnde Lamellenkontakte 22 auf, die in der dargestellten AUS-Stellung des Schalters auf den festen Anschlußfahnen 6 ruhen.

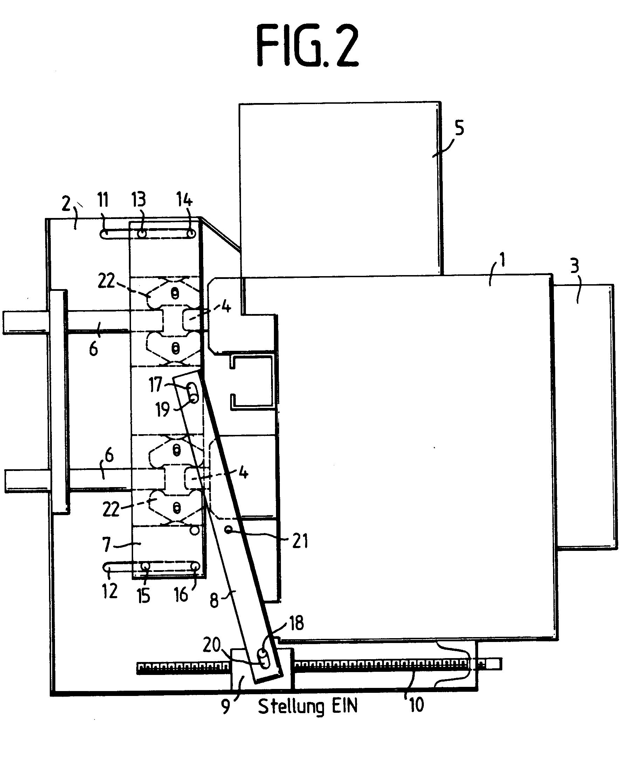

Durch Betätigen der Spindel 10 bewegt sich der Kontaktrahmen 7 mit den Lamellenkontakten 22 in die in Fig. 2 gezeichnete EIN-Stellung, wobei die Lamellenkontakte 22 die Anschlußfahnen 4 und 6 miteinander verbinden.

Da der Spindelantrieb 10 unterhalb des Leistungsschalters im Einschubträger 2 angeordnet ist, werden die bislang bekannten Probleme mit der Anordnung des Hebelantriebes an der frontseitigen Trennwand vor dem Leistungsschalter, wie sie vorstehend geschildert wurden, vermieden. Darüber hinaus wird mit der Führung des Kontaktrahmens 7 in den beidseitigen Schlitzen 11 und 12 des Einschubträgers 2 ein verkantungssicherer Betrieb des Auftrennens der elektrischen Verbindung erreicht.

Die Kontaktanordnung in der Betriebsstellung EIN des Leistungsschalters ist in Fig. 2 dargestellt.

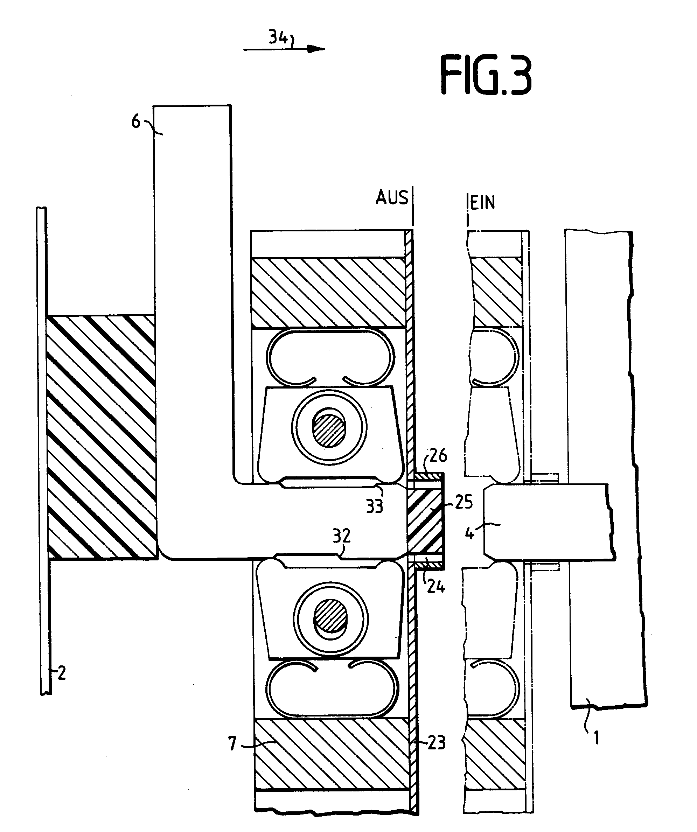

Fig. 3 zeigt die auf dem Kontaktrahmen 7 befestigte, zwangsgeführte Abdeckplatte 23, die zur elektrischen Isolierung der stromführenden Anlagenteile dient. Die am Einschubträger 2 befestigte Anschlußfahne 6 ist an dem in den Einschubträger hineinragenden Ende stirnseitig mit einem elektrischen Isolierteil 25 versehen und kann im Bereich des Abdeckplattendurchbruches 24 mit einem vorspringenden Rahmen 26 umgeben sein. Dadurch wird eine berührungs- und werkzeugsichere Abdeckung der Anschlußfahne 6 in den Stellungen TEST bis AUS erreicht. Die Ausbildung des Kontaktrahmens 7 mit der Abdeckplatte 23 umfaßt alle Anschlußfahnen 6 eines Einschubträgers 2. Weiterhin zeigt Fig. 3 eine Anschlußfahne 6 mit unsymmetrischen Anfahrkanten (32,33), die ein zeitlich gestaffeltes Übergleiten der einander gegenüber liegenden Kontaktbrücken 22 bei Bewegung des Kontaktrahmens 7 in Richtung des Pfeiles 34 ermöglichen und somit das Übergleiten erleichtern.

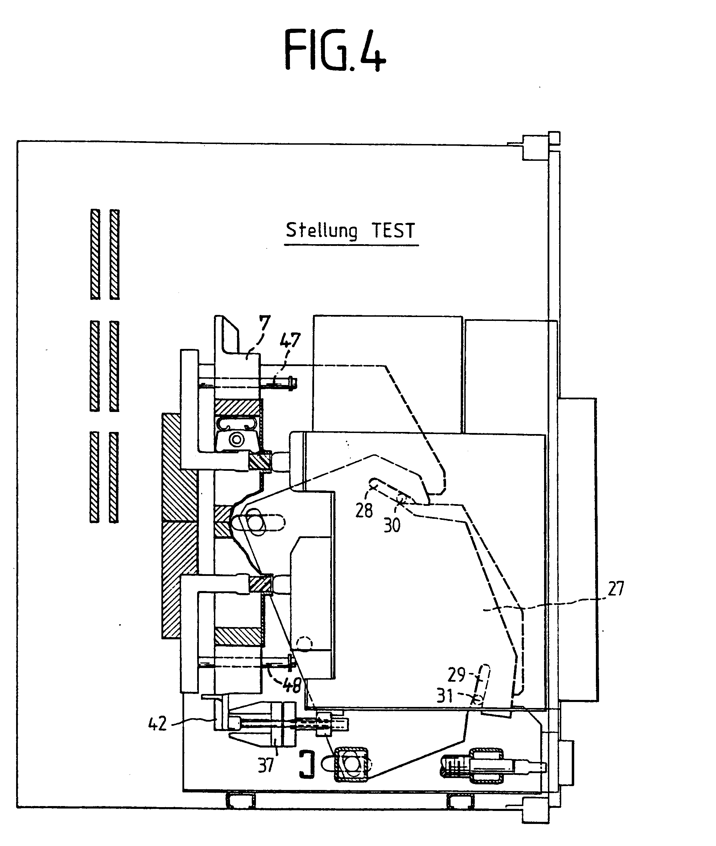

Fig. 4 zeigt, daß der in Fig. 1 dargestellte Hebel 8 zum Zwecke der Fixierung des Leistungsschalters in seinen Betriebsstellungen TEST und EIN als Platte 27 ausgebildet ist, die mit Einfahrschlitzen 28,29 versehen ist, in der die Zapfen 30,31 des Leistungsschalters geführt werden. Weiterhin zeigt das in Fig. 4 dargestellte Ausführungsbeispiel die verkantungssichere Führung des Kontaktrahmens 7 auf den Stiften 47, 48 und eine mögliche Anordnung der Steck-Kontaktverbindung 37, 42 für die elektrische Verbindung der Nebenstromkreise des Leistungsschalters 1.

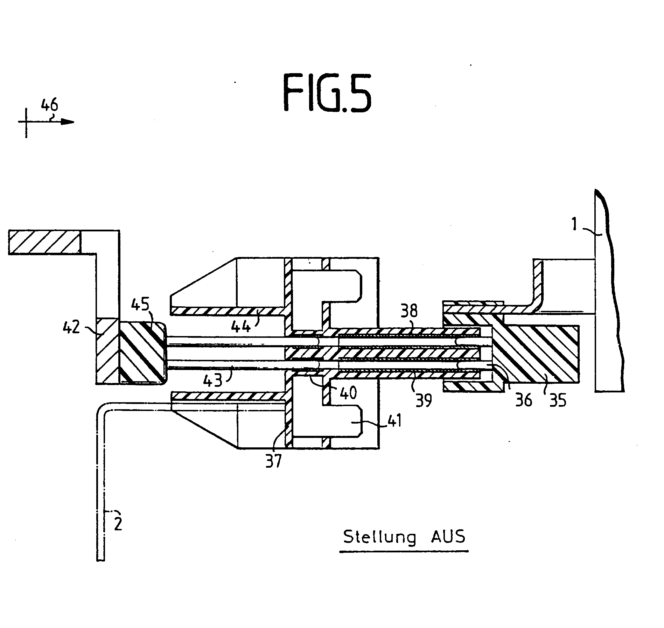

In Fig. 5 ist die Steck-Kontaktvorrichtung für die elektrische Verbindung der Nebenstromkreise des Leistungsschalters in der Betriebsstellung AUS dargestellt. Die Verbindung zwischen Kontaktstecker 42 und Kontaktrahmen 7, die in beliebiger Form ausgeführt sein kann, ist in Fig. 5 nicht dargestellt.Die Kontaktstifte 43 des Kontaktsteckers 42 sind in der Betriebsstellung AUS in die Buchsen 40 der Buchsenleiste 37 eingeführt und werden zur Einstellung der Betriebsstellungen TEST und EIN zwangsläufig in Richtung des Bewegungspfeiles 46 in die Kontaktbuchsen 39 eingeführt.

**Patentansprüche**

1. Kontaktanordnung für einschiebbare Leistungsschalter in Schaltaniagen, wobei im festen Anlagenteil und am Leistungsschalter Anschlußfahnen (4, 6) vorgesehen sind, der Leistungsschalter in eine feste Stellung eingeschoben wird und zur elektrisch leitenden Verbindung der festen mit den am Leistungsschalter angeordneten Anschlußfahnen (4, 6) Kontaktbrücken (22) vorgesehen sind, die über einen Antrieb in vorbestimmte Kontaktstellungen bringbar sind, und wobei die elektrischen Verbindungen von Nebenstromkreisen über einen zwangsläufig mit einem Kontaktrahmen (7) bewegten Kontakt (42) hergestellt wird, **dadurch gekennzeichnet,** daß die Kontaktbrücken (22) in einem Kontaktrahmen (7) angeordnet sind, der über einen fest im Einschubträger (2) unterhalb des Leistungsschalters (1) angeordneten Spindelantrieb (8, 9, 10) in die verschiedenen Betriebsstellungen AUS, TEST und EIN bewegt wird, daß mit der Bewegung des Kontaktrahmens (7) der Leistungsschalter (1) in den Betriebsstellungen TEST und EIN auf seinem Platz im Einschubträger (2) zwangsläufig fixiert ist. daß der Kontaktrahmen (7) eine Abdeckplatte (23) aufweist, durch die in den verschiedenen Betriebsstellungen zwangsläufig eine berührungs- und werkzeugsichere Abdeckung der stromführenden Anlagenteile gewärleistet ist und daß die auf dem Kontaktrahmen (7) angeordnete Abdeckplatte (23) im Bereich der Anschlußfahnen (6) mit Durchbrüchen (24) versehen ist, die in der Betriebsstellung TEST und AUS von elektrischen isolierteilen (25) ausgefüllt werden, die auf dem stirnseitigen Ende der Anschlußfahnen (6) befestigt sind.

2. Kontaktanordnung nach Anspruch 1, **dadurch gekennzeichnet,** daß die Durchbrüche (24) der Abdeckplatte (23) mit vorspringenden Rahmen (26) umgeben sind, die in den Betriebsstellungen AUS und TEST durch die elektrischen Isolierteile (25) ausgefüllt sind.

3. Kontaktanordnung nach Anspruch 1 oder 2, **dadurch gekennzeichnet,** daß der Kontaktrahmen (7) in horizontalen Längsschlitzen (11, 12) in dem festen Einschubträger (2) geführt und über einen Antriebshebel (8) mit der Mutter (9) des Spindelantriebs (10) verbunden ist.

4. Kontaktanordnung nach Anspruch 3, **dadurch gekennzeichnet,** daß der Anriebshebel (8) etwa mittig auf einem festen Drehzapfen (21) gelagert ist und an den Enden Langlöcher (19, 20) aufweist, die Zapfen (17 , 18) am Kontaktrahmen (7) und an der Spindelmutter (9) aufnehmen.

5. Kontaktanordnung nach Anspruch 3, **dadurch gekennzeichnet,** daß in den horizontalen Längsschlitzen (11, 12) je zwei am Kontaktrahmen (7) befestigte Führungszapfen (13, 16) vorgesehen sind.

6. Kontaktanordnung nach Anspruch 3, **dadurch gekennzeichnet,** daß der Antriebshebel (8) als Platte (27) ausgebildet ist, die auf dem festen Drehzapfen (21) gelagert ist und über Einfahrschlitze (28, 29) und Zapfen (30, 31) gleichzeitig mit dem Verschieben des Kontaktrahmens (7) den Leistungsschalter (1) in den Betriebsstellungen TEST und EIN auf seinem Platz im Einschubträger (2) fixiert.

7. Kontaktanordnung nach Anspruch 3, **dadurch gekennzeichnet,** daß die Anschlußfahnen (6) an ihrem Ende mit unsymmetrisch ausgebildeten Anfahrkanten (32, 33) versehen sind.

8. Kontaktanordnung nach Anspruch 1, **dadurch gekennzeichnet,** daß zur elektrisch leitenden Verbindung der Nebenstromkreise zwischen festem Anlagenteil und Leistungsschalter (1) am Leistungschalter (1) ein Steckergehäuse (35) befestigt ist, welches mehrere Steckerstifte (36) aufweist, daß am Einschubträger (2) eine mit dem Steckergehäuse (35) korrespondierende Buchsenleiste (37) angeordnet ist, welche einen oder mehrere in das Steckergehäuse (35) eingreifende Vorsprünge (38) besitzt und welche in Zuordnung zu jedem der Steckerstifte (36) jeweils zwei in deren Achsrichtung hintereinanderliegend angeordnete, voneinander elektrisch isolierte Kontaktbuchsen (39) bzw. (40) aufweist, deren zum Einschubträger hinweisend angeordnete Kontaktbuchsen (40) Anschlüsse (41) für die Verdrahtung mit dem feststehenden Teil der Schaltanlage besitzen und daß am einfahrbaren Kontaktstecker (42), der zusammen mit dem Kontaktrahmen (7) befestigt wird, elektrisch isoliert eine der Zahl der Steckerstifte (36) entspredhende Anzahl von Einfahrstiften (43) angeordnet ist, die in die Kontaktbuchsen (39, 40) entsprechend der Bewegung des Kontaktsteckers (42) kontaktierend einführbar sind.

9. Kontaktanordnung nach Anspruch 8, **dadurch gekennzeichnet,** daß die Buchsenleiste (37) Führungsteile (44) für am einfahrbaren Kontaktstecker (42) angeordnete Bauteile wie z. B. die Aufnahme (45) für die Einfahrstifte (43) besitzt.

10. Kontaktanordnung nach Anspruch 8, **dadurch gekennzeichnet,** daß die EinFahrstifte (43) in den Betriebsstellungen AUS bis EIN in den kontaktbuchsen (39, 40) der Buchsenleiste (37) geführt sind.

11. Kontaktanordnung nach Anspruch 1, **dadurch gekennzeichnet,** daß der Kontaktrahmen (7) auf horizontalen Stiften (47, 48) in dem festen Einschubträger (2) verkantungssicher geführt und über einen Antriebshebel (8) mit der Mutter (9) des Spindelantriebes (10) verbunden ist.

**Claims**

1. Contact arrangement for an insertable circuit breaker in switch gear, wherein connecting lugs (4, 6) are provided in the fixed part of the switch gear and at the circuit breaker, the circuit breaker is displaced into a fixed setting and contact bridges (22), which are bringable into a predetermined contact setting by way of a drive, are provided for the electrically conductive connection of the fixed connecting lugs (6) with the connecting lugs (4) arranged at the circuit breaker, and wherein the electrical connections of secondary circuits are produced by way of a contact (42) automatically moved with a contact carriage (42), characterised thereby that the contact bridges (22) are arranged in a contact carriage (7), which is moved into the different operating settings OFF, TEST and ON by way of a spindle drive (8, 9, 10) fixedly arranged in the plug-in carrier (2) and below the circuit breaker (1), that with the movement of the contact carriage (7) the circuit breaker (1) is automatically fixed in the operating settings TEST and ON at its place in the plug-in carrier (2), that the contact carriage (7) had a cover plate (23) by which a contact-secure and tool-secure covering of the current-conducting parts of the switch gear is automatically ensured in the different operating settings, and that the cover plate (23) arranged on the contact carriage (7) is provided in the region of the connecting lugs (6) with through passages (24) which in the operating settings TEST and OFF are filled by electrical insulating members (25) which are attached to the front ends of the connecting lugs (6).

2. Contact arrangement according to claim 1, characterised thereby that the through passages (24) of the cover plate (23) are surrounded by projecting frames 26, which are filled in the operating settings OFF and TEST by the electrical insulating (25).

3. Contact arrangement according to claim 1 or 2, characterised thereby that the contact carriage (7) is guided in horizontal longitudinal slots (11, 12) in the fixed plug-in carrier (2) and is connected with the nut (9) of the spindle drive (10) by way of a drive lever (8).

4. Contact arrangement according to claim 3, characterised thereby that the drive lever (8) is mounted approximately centrally on a fixed fulcrum pin (21) and has elongate holes (19, 20), which receive pins (17, 18) at the contact carriage (7) and at the spindle nut (9), at the ends.

5. Contact arrangement according to claim 3, characterised thereby that respectively provided in the horizontal longitudinal slots (11, 12) are two guide pins (13, 16) fastened to the contact carriage (7).

6. Contact arrangement according to claim 3, characterised thereby that the drive lever (8) is constructed as a plate (27), which is mounted on the fixed fulcrum pin (21) and fixes, by way of run-in slots (28, 29) and pins (30, 31) and simultaneously with the displacement of the contact carriage (7), the circuit breaker (1) in the operating settings TEST and ON at its place in the plug-in carrier (2).

7. Contact arrangement according to claim 3, characterised thereby that the connecting lugs (6) are provided at their ends with asymmetrically constructed drive up edges.

8. Contact arrangement according to claim 1, characterised thereby that for the electrically conductive connection of the secondary circuits between the fixed part of the switch gear and the circuit breaker a plug housing (35), which has several plug pins (36), is fastened to the circuit breaker, that arranged at the plug-in carrier (2) is a sleeve strip (37), which corresponds with the plug housing (35), possesses one or several projections (38) engaging into the plug housing (35) and has in association with each of the plug pins (36) a respective pair of contact sleeves (39) or (40), which are electrically insulated from one another, are arranged one behind the other in the axial direction thereof and of which the contact sleeves (40), arranged to point towards the plug-in carrier, possess connections (41) for wiring to the stationary part of the switch gear, and that arranged electrically insulated at the drivable contact plug (42), which is fastened together with the contact carriage (7), is a number of drive-in pins (43) corresponding to the number of plug pins (36), which drive-in pins are contactingly insertable into the contact sleeves (39, 40) corresponding to the movement of the contact plug (42).

9. Contact arrangement according to claim 8, characterised thereby that the sleeve strip (34) possesses guide members (44) for components, such as for example the receptacles (45) for the drive-in pins (43), arranged at the drivable contact plug (42).

10. Contact arrangement according to claim 8, characterised thereby that the drive-in pins (43) are guided in the operating settings OFF to ON into the contact sleeves (39, 40) of the sleeve strip (37).

11. Contact arrangement according to claim 1, characterised thereby that the contact carriage is guided on horizontal pins (47, 48) in the fixed plug-in carrier (2) to be secure against canting and is connected with the nut (9) of the spindle drive (10) by way of drive lever (8).

## Revendications

1. Dispositif de contact pour interrupteur de puissance rétractable dans des installations de distribution, selon lequel, dans la partie fixe de l'installation de distribution et sur l'interrupteur de puissance, sont prévues des barrettes (4,6), selon lequel l'interrupteur de puissance est introduit dans une position fixe et pour la connection conductrice des barrettes fixes (4,6) avec celles disposées sur l'interrupteur de puissance sent prévus des ponts de contact (22), qu'un entraînement permet d'emmener dans des positions prédéterminées, et selon lequel les raccordements électriques de circuits de courant auxiliaires sont produits au moyen d'un contact (42) à déplacement forcé avec un cadre de contact (7), caractérisé en ce que les ponts de contact (22) sont disposés sur un cadre de contact (7), qui se déplace par l'intermédiaire d'un entraînement à tige filetée (8, 9, 10) disposé fixement dans le support du rack (2) sous l'interrupteur de puissance (1) dans les différents modes opératoires, Arrêt, Test et Marche, en ce que l'interrupteur de puissance (1) est fixé inévitablement à sa place dans le support du rack (2) en modes opératoires Test et Marche lors du déplacement du cadre de contact (7), en ce que le cadre de contact (7) présente une plaque de recouvrement (23) par laquelle un recouvrement de protection contre les contacts et les outils des parties conductrices de l'installation est garanti dans les différents modes opératoires et en ce que la plaque de recouvrement (23) est disposée sur le cadre de contact (7) et est munie dans la zone des barrettes (6) des passages (24), qui sont remplis par des pièces isolantes à l'électricité (25) en modes opératoires Test et Arrêt, qui sont fixées sur l'extrémité frontale des barrettes (6).

2. Dispositif de contact selon la revendication 1, caractérisé en ce que les passages (24) de la plaque de recouvrement (23) sont entourés d'un cadre saillant (26), ces passages étant remplis par les pièces isolantes à l'électricité (25) en modes opératoires Arrêt et Test.

3. Dispositif de contact selon les revendications 1 ou 2, caractérisé en ce que le cadre de contact (7) est guidé dans des fentes longitudinales horizontales (11, 12) dans le support fixe du rack (2) et est relié à l'écrou (9) de l'entraînement à tige filetée (10) par le levier d'entraînement (8).

4. Dispositif de contact selon la revendication 3, caractérisé en ce que le levier d'entraînement (8) est loge à peu près au milieu sur un tourillon rotatif fixe (21) et présente aux extrémités des trous longitudinaux (19, 20) qui reçoivent les tourillons (17, 18) sur le cadre de contact (7) et sur l'écrou de la tige filetée (9).

5. Dispositif de contact selon la revendication 3, caractérisé en ce que dans chaque fente longitudinale horizontale (11, 12) sont prévus des tourillons de guidage (13 ,16) fixés au cadre de contact (7).

6. Dispositif de contact selon la revendication 3, caractérisé en ce que le levier d'entraînement (8) est conçu comme une plaque (27), qui est logée sur le tourillon rotatif fixe (21) et qui fixe à sa place dans le support du rack (2) l'interrupteur de puissance (1) en modes opératoires Test et Marche simultanément avec le déplacement du cadre de contact (7) par l'intermédiaire de fentes d'introduction (28, 29) et de tourillons (30, 31).

7. Dispositif de contact selon la revendication 3, caractérisé caractérisé en ce que les barrettes (6) sont munies à leurs extrémités d'arêtes de départ (32, 33) conçues asymétriquement.

8. Dispositif de contact selon la revendication 1, caractérisé caractérisé en ce qu'un logement de prise (35) est fixé à l'interrupteur de puissance (1) pour le raccordement conducteur des circuits de courant auxiliaires entre la partie fixe de l'installation et l'interrupteur de puissance (1) et présente plusieurs fiches (36), en ce qu'une réglette à douilles (37) correspondant au logement de prise (35) est fixée sur le support du rack (2), laquelle comprend une ou plusieurs saillies (38) pénétrant dans le logement de prise (35) et présentant chacune en coordination avec chacune des pointes de contact (36) deux douilles de contact (39, 40) isolées électriquement l'une de l'autre, disposées dans leur orientation l'une derrière l'autre, dont les douilles de contact (40) disposées en direction du support du rack comprennent des raccordements (41) pour le câblage de la partie fixe de l'installation de distribution et en ce qu'un nombre de pointes de contact (36) correspondant à celui des tiges d'introduction (43) est disposé isolé électriquement sur la fiche de contact enfichable (42) qui est fixée ensemble avec le cadre de contact (7), ces tiges d'introduction étant introduites dans les douilles de contact (39, 40) correspondant au mouvement de la fiche de contact (42).

9. Dispositif de contact selon la revendication 8, caractérisé en ce que la réglette à douilles (37) comprend des pièces de guidage (44) pour les composants disposés sur la fiche de contact enfichable (42) comme par exemple la réception (45) pour les tiges d'introduction (43).

10. Dispositif de contact selon la revendication 8, caractérisé en ce que les tiges d'introduction (43) sont guidées dans les douilles de contact (39, 40) de la réglette à douilles (37) en modes opératoires Arrêt et Marche.

11. Dispositif de contact selon la revendication 1, caractérisé en ce que le cadre de contact (7) est guidé sans coincement sur des tiges horizontales (47, 48) dans le support fixe du rack (2) et est relié à l'écrou (9) de l'entraînement à tige filetée (10) par le levier d'entraînement (8).

# FIG.1

Stellung AUS

EP 0 253 170 B1

# FIG.2

Stellung EIN

8

34)

FIG.3

6

AUS    EIN

26

33    25

32    4

24

2    7    23    1

# FIG.4

Stellung TEST

# FIG.5

46

1

45

42

44

38

43

40

39

37

36  35

41

2

Stellung   AUS